(19) Europäisches Patentamt
European Patent Office
Office européen des brevets

(11) EP 1 916 264 A1

(12) # EUROPEAN PATENT APPLICATION

(43) Date of publication:
**30.04.2008 Bulletin 2008/18**

(21) Application number: **06122764.1**

(22) Date of filing: **23.10.2006**

(51) Int Cl.:
***C08F 10/06*** *(2006.01)* ***C08F 4/651*** *(2006.01)*
***C08F 4/654*** *(2006.01)*

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **TOTAL PETROCHEMICALS RESEARCH FELUY**
**7181 Seneffe (Feluy) (BE)**

(72) Inventors:
- **Standaert, Alain**
**B - 1020, Bruxelles (BE)**
- **Gromada, Jérôme**
**B-5380, Marchovelette (BE)**
- **Vandewiele, David**
**B-7110, Strépy-Bracquegnies (BE)**

(74) Representative: **Leyder, Francis et al**
**Total Petrochemicals Research Feluy**
**Zone Industrielle C**
**7181 Seneffe (Feluy) (BE)**

(54) **Process for the production of propylene polymers having a low ash content**

(57) The present invention relates of a polymerization process for the production of propylene polymers with low ash content using a Ziegler-Natta catalyst with a diether as internal electron donor. The present invention also relates to the propylene polymers produced with said process as well as to films, fibers and nonwovens made with said propylene polymer.

EP 1 916 264 A1

## Description

### Field of the invention

The present invention concerns a process for making propylene homo- or copolymers having low ash content. In this application "ash" means Al as well as residues of catalyst, cocatalyst or any additive to make propylene polymers, such as Ti and Si derivatives. The propylene polymers of the present invention are useful to make films, such as capacitor films, as well as fibers and nonwovens, such as for example staple fibers, spunbond nonwovens, meltblown nonwovens.

### The technical problem and the prior art

Propylene homo and copolymers are produced in the presence of

(a) a Ziegler-Natta catalyst comprising a titanium compound having at least one titanium-halogen bond, and an internal electron-donor compound, both supported on a magnesium halide in active form,
(b) an organoaluminium compound, such as an aluminium alkyl compound, and
(c) optionally an external electron donor (ED).

As internal electron donors, mention may be made of compounds selected from the group consisting of ethers, ketones, lactones, compounds containing N, P and/or S atoms, and esters of mono- and dicarboxylic acids. Particularly suitable internal electron donors are diethers, such as 1,3-diethers, and phthalic acid esters, such as diisobutyl, di-n-butyl, dioctyl, diphenyl and benzylbutyl phthalate.

As the Ziegler-Natta catalyst, the organoaluminium compound and the optional external donor (ED) are not removed after the polymerization but rather left in the polymer, propylene polymers contain residues of the catalyst system, such as Al, Ti, Mg and Cl. The total of these residues is called "ash".

High levels of ashes in a propylene polymer may lead to plate-out and in consequence necessitate frequent cleaning of down-stream processing equipment, for example of a film or sheet extrusion line or of a fiber or nonwoven production line. In order to reduce the ash content the propylene polymer may be washed. However, such a washing process is energy intensive and expensive.

EP449302 describes a process for the production of polypropylene with less than 15 ppm of ash content. Such a polypropylene is for example particularly suitable for use in capacitor films. In said process the catalyst is a Ziegler-Natta catalyst, the internal electron donor is 2-isopropyl-2-isoamyl-1,3-dimethoxypropane or 2-cyclohexyl-2-isopropyl-1,3-dimethoxypropane and the organoaluminium compound is Al-triisobutyl. There is no external electron donor. Operating conditions are as follows:

- the molar ratio Al/Ti is 30,
- the average residence time is 6 hours,
- polymerization is carried out at 70°C in liquid propylene in a 950 l loop reactor,
- propylene feed is 88.5 kg/h,
- polypropylene production is 46 kg/h, and
- the yield is 150 kg of polypropylene per g of catalyst, corresponding to 25 kg /g catalyst /h.

The resulting Al residue in the polypropylene is between 4.5 and 4.8 ppm. Due to the low yield and low productivity this process is not of commercial interest anymore.

It is therefore an object of the present invention to provide a commercially viable process for the production of propylene homo- and copolymers with a very low ash content, in particular with a very low aluminium content.

### Brief description of the invention

We have now discovered a polymerization process that allows the production of propylene polymers with low ash content, in particular with low aluminium content.

Thus, the present invention provides a process for the production of propylene polymers having a low ash content by polymerization of propylene and one or more optional comonomers in a polymerization reactor in presence of:

(a) a Ziegler-Natta catalyst comprising a titanium compound having at least one titanium-halogen bond, and an internal electron donor, both supported on a magnesium halide in active form,
(b) triethyl aluminium, and
(c) optionally an external electron donor (ED),

wherein the internal electron donor comprises at least 80 wt% of a diether, the molar ratio Al/Ti is at most 40, the residence time in the polymerization reactor is at most 2 hours, and the propylene polymers are recovered from the polymerization reactor, without any washing, as a powder and optionally converted to pellets.

The present invention also provides films, fibers and nonwovens made with propylene polymers produced by said process, which have a low ash content, as well as the use of said films, fibers and nonwovens.

**Brief description of the drawings**

Figure 1 shows the relative productivities for a diether catalyst (ZN126) and a phthalate catalyst (ZN111) for different Al/Ti molar ratios.

Figure 2 shows the productivities for a diether catalyst at two Al/Ti molar ratios in dependence on the xylene solubles (XS) of the polymer produced.

**Detailed description of the invention**

For easier understanding the terms "diether catalyst", "succinate catalyst" and "phthalate catalyst" are used to denote a Ziegler-Natta catalyst with a diether compound as internal electron donor resp. a Ziegler-Natta catalyst with a succinate compound as internal electron donor, resp. a Ziegler-Natta catalyst with a phthalate compound as internal donor.

For the purposes of the present invention the terms "propylene polymer" and "polypropylene" may be used interchangeably.

The propylene polymers of the present invention can be homopolymers or random copolymers of propylene and one or more comonomers, which can be ethylene or a $C_4$-$C_{20}$ alpha-olefin.

The random copolymers of the present invention comprise at least 0.1 wt%, preferably at least 0.2 wt%, and most preferably at least 0.5 wt% of comonomer(s). They comprise at most 2 wt% of comonomer(s). Preferably, the random copolymers are copolymers of propylene and ethylene.

The melt flow index of the propylene polymers of the present invention is in the range from 1 to 2000 dg/min as measured according to ASTM D 1238, condition L, at 230°C with a load of 2.16 kg. If used for films the propylene polymers of the present invention preferably have a melt flow index in the range from 1 to 10 dg/min, and more preferably in the range from 1 to 4 dg/min. If used for fibers and nonwovens the propylene polymers of the present invention preferably have a melt flow index in the range from 5 to 2000 dg/min. If used for fibers, such as staple fibers, the propylene polymers of the present invention preferably have a melt flow index in the range from 5 to 40 dg/min. If used for spunbond nonwoven the propylene polymers of the present invention preferably have a melt flow index in the range from 5 to 100 dg/min. If used for meltblown nonwoven the propylene polymers of the present invention preferably have a melt flow index in the range from 250 to 2000 dg/min.

The Ziegler-Natta catalyst comprises a titanium compound having at least one titanium-halogen bond, and an internal donor, both supported on magnesium halide in active form. The internal donor used in the present invention is a diether or a blend of a diether and one or more internal donors different from diether, provided that such a mixture shows polymerization behavior comparable to a Ziegler-Natta catalyst with only diether as internal donor. A mixture of internal donors could for example comprise a diether and a phthalate, or a diether and a succinate.

Alternatively to a Ziegler-Natta catalyst comprising a mixture of internal donors as described above it is also possible to employ a mixture of a diether catalyst and one or more Ziegler-Natta catalysts comprising an internal donor other than diether, provided that such a mixture shows comparable polymerization behavior as a pure diether catalyst. For example, it is possible to employ a mixture of a diether catalyst and a phthalate catalyst or a mixture of a diether catalyst and a succinate catalyst.

Independently of whether one Ziegler-Natta catalyst with a mixture of internal donors or a mixture of Ziegler-Natta catalysts comprising different electron donors is used, the diether comprises at least 80 wt%, preferably at least 90 wt%, more preferably at least 95 wt%, and even more preferably at least 99 wt% of the total weight of the electron donors. It is, however, most preferred that the internal donor is a diether only.

Ziegler-Natta catalysts comprising a diether as internal donor are well-known in the art and can for example be obtained by reaction of an anhydrous magnesium halide with an alcohol, followed by titanation with a titanium halide and reaction with a diether compound as internal donor. Such a catalyst comprises about 2-6 wt% of titanium, about 10 - 20 wt% of magnesium and about 5-30 wt% of internal donor with chlorine and solvent making up the remainder.

Particularly suited as internal donors are 1,3-diethers of formula

$$R^1 R^2C(CH_2OR^3)(CH_2OR^4)$$

wherein $R^1$ and $R^2$ are the same or different and are $C_1$-$C_{18}$ alkyl, $C_3$-$C_{18}$ cycloalkyl or $C_7$-$C_{18}$ aryl radicals; $R^3$ and $R^4$ are the same or different and are $C_1$-$C_4$ alkyl radicals; or are the 1,3-diethers in which the carbon atom in position 2 belongs to a cyclic or polycyclic structure made up of 5, 6 or 7 carbon atoms and containing two or three unsaturations. Ethers of this type are disclosed in published European patent applications EP361493 and EP728769. Representative examples of said diethers are 2-methyl-2-isopropyl-1,3-dimethoxypropane; 2,2-diisobutyl-1,3-dimethoxypropane; 2-isopropyl-2-cyclopentyl-1,3-dimethoxypropane; 2-isopropyl-2-isoamyl-1,3-dimethoxypropane; 9,9-bis(methoxymethyl)fluorene.

Suitable succinate compounds have the formula

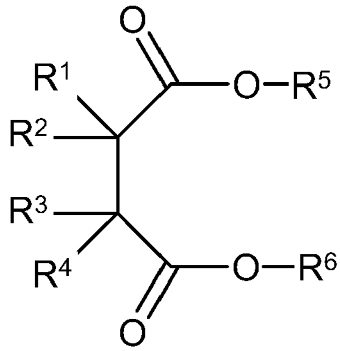

wherein $R^1$ to $R^4$ are equal to or different from one another and are hydrogen, or a C1-C20 linear or branched alkyl, alkenyl, cycloalkyl, aryl, arylalkyl or alkylaryl group, optionally containing heteroatoms, and $R^1$ to $R^4$, being joined to the same carbon atom, can be linked together to form a cycle; and $R^5$ and $R^6$ are equal to or different from one another and are a linear or branched alkyl, alkenyl, cycloalkyl, aryl, arylalkyl or alkylaryl group, optionally containing heteroatoms.

Suitable phthalates are selected from the alkyl, cycloalkyl and aryl phthalates, such as for example diisobutyl phthalate, di-n-butyl phthalate, dioctyl phthalate, diphenyl phthalate and benzylbutyl phthalate phthalate.

Ziegler-Natta catalysts comprising a diether, a succinate or a phthalate as internal donor are commercially available for example from Basell under the Avant ZN trade name.

For the present invention the external electron donor (ED) is optional. It is nevertheless preferred to perform the polymerization in presence of an external electron donor (ED). Suitable external electron donors (ED) include certain silanes, ethers, esters, amines, ketones, heterocyclic compounds and blends of these. It is preferred to use a 1,3-diether as described above or a silane. It is most preferred to use silanes of the general formula

$$R^a_pR^b_qSi(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si($OCH_3$)$_2$, (cyclohexyl)(methyl) Si($OCH_3$)$_2$ (referred to as "C donor"), (phenyl)$_2$Si($OCH_3$)$_2$ and (cyclopentyl)$_2$ Si($OCH_3$)$_2$ (referred to as "D donor").

The organoaluminium compound used in the process of the present invention is triethyl aluminium (TEAL). Advantageously, the triethyl aluminium has a hydride content, expressed as $AlH_3$, of less than 1.0 wt% with respect to the triethyl aluminium. More preferably, the hydride content is less than 0.5 wt%, and most preferably the hydride content is less than 0.1 wt%. It would not depart from the scope of the invention if the organoaluminium compound contains minor amounts of other compounds of the trialkylaluminium family, such as triisobutyl aluminium, tri-n-butyl aluminium, and linear or cyclic alkyl aluminium compounds containing two or more Al atoms, provided they show polymerization behavior comparable to that of TEAL.

In the process of the present invention the molar ratio Al/Ti is at most 40, preferably it is in the range from 10 to 40, and more preferably it is in the range from 15 to 35. The molar ratio Al/ED, with ED denoting external electron donor, is at most 120, preferably it is in the range from 10 to 120, and more preferably in the range from 20 to 80.

The polymerization of propylene and one or more optional comonomers can be carried out according to known techniques. The polymerization can for example be carried out in liquid propylene as reaction medium. It can also be carried out in a diluent, such as an inert hydrocarbon (slurry polymerization) or in the gas phase.

For the present invention propylene homopolymers and random copolymers are preferably produced by polymerization in liquid propylene at temperatures in the range from 20°C to 100°C. Preferably, temperatures are in the range from 60°C to 80°C. The pressure can be atmospheric or higher. It is preferably between 25 and 50 bar. The molecular weight of the polymer chains, and in consequence of the melt flow of the propylene polymer, is regulated by adding hydrogen.

Before being fed to the polymerization reactor the catalytic system preferably undergoes a premix and/or a pre-polymerization step. In the premix step, the triethyl aluminium (TEAL) and the external electron donor (ED) - if present -, which have been pre-contacted, are mixed with the Ziegler-Natta catalyst at a temperature in the range from 0°C to 30°C, preferably in the range from 5°C to 20°C, for up to 30 min. The mixture of TEAL, external electron donor and Ziegler-Natta catalyst is pre-polymerized with propylene at a temperature in the range from 10°C to 100°C, preferably in the range from 10°C to 30°C, for 1 to 30 min, preferably for 2 to 20 min.

The residence time in the polymerization reactor is at most 2 hours, more preferably at most 1.5 hours, and most preferably at most 1.25 hours. The residence time in the polymerization reactor is at least 0.25 hours, preferably at least 0.5 hours, and most preferably at least 0.75 hours.

The propylene polymers are recovered from the polymerization reactor, without any washing, as a powder and optionally converted to pellets.

The productivity of the polymerization catalyst is equal to or higher than 30 kg of propylene polymer per g catalyst. Preferably, it is higher than 35 kg, more preferably higher than 40 kg, even more preferably higher than 45 kg of propylene polymer per g catalyst.

The propylene polymers of the present invention are characterized by a low titanium content in combination with a low aluminium content. The titanium content of the propylene polymers of the present invention is at most 2 ppm, preferably at most 1.5 ppm, more preferably at most 1.25 ppm and most preferably at most 1 ppm. The propylene polymers of the present invention comprise at most 30 ppm of aluminium, more preferably at most 25 ppm, even more preferably at most 20 ppm and most preferably at most 15 ppm.

It has now surprisingly been found that the propylene polymers of the present invention are characterized by a low level of xylene solubles (XS). It has been particularly surprising that propylene polymers characterized by a low level of xylene solubles can be produced with good productivity. The propylene polymers of the present invention also give good processability and result in good mechanical properties of the final articles, such as a films, fibers and nonwovens.

The propylene homopolymers of the present invention are characterized by a xylene soluble fraction (XS) of at most 6 wt%, preferably at most 5 wt%, even more preferably at most 4.5 wt%. The xylene soluble fraction (XS) is at least 0.5 wt%, more preferably at least 1 wt% and most preferably at least 1.5 wt%.

The propylene polymers of the present invention may contain additives such as, by way of example, antioxidants, light stabilizers, acid scavengers, lubricants, antistatic additives, nucleating/clarifying agents, colorants. An overview of such additives may be found in Plastics Additives Handbook, ed. H. Zweifel, 5$^{th}$ edition, 2001, Hanser Publishers.

The propylene polymers of the present invention are specifically suited for film applications, such as cast films, blown films, bioriented films. Such films in turn are well-suited for packaging applications. The propylene polymers of the present invention are particularly suited for capacitor films.

The propylene polymers of the present invention are specifically suited for fiber and nonwoven applications, such as staple fibers, spunbond nonwovens, meltblown nonwovens. Staple fibers in turn can be used for making thermal bonded nonwovens. Thermal bonded nonwovens and spunbond nonwovens can be used in hygiene applications, such as diapers or feminine hygiene articles, in construction applications or geotextiles; potentially in combination with a meltblown nonwoven. Meltblown nonwoven are particularly suited for filter applications.

Examples

The following examples were conducted using polymerization catalysts, which are commercially available from Basell. Avant ZN126 is a Ziegler-Natta catalyst containing 3.5 wt% titanium, 14.4 wt% magnesium and a diether compound as internal donor. Avant ZN111 is a Ziegler-Natta catalyst with 1.9 wt% titanium, 18.6 wt% magnesium and a phthalate compound as internal donor.

The melt flow index (MFI) was measured according to ASTM D 1238, condition L, at 230°C with a load of 2.16 kg.

Xylene solubles (XS) were determined as follows: Between 4.5 and 5.5 g of propylene polymer were weighed into a flask and 300 ml xylene were added. The xylene was heated under stirring to reflux for 45 minutes. Stirring was continued for 15 minutes exactly without heating. The flask was then placed in a thermostated bath set to 25°C +/- 1°C for 1 hour. The solution was filtered through Whatman n° 4 filter paper and exactly 100 ml of solvent were collected. The solvent was then evaporated and the residue dried and weighed. The percentage of xylene solubles ("XS") was then calculated according to

$$XS \text{ (in wt\%)} = (\text{Weight of the residue / Initial total weight of PP}) * 300$$

The aluminium content of the propylene polymer was determined by an inductively coupled plasma technique with atomic emission spectroscopy using a polymer sample of 10 g. The aluminium content ("Al" in tables 1 and 2) is given in ppm based on the total weight of the propylene polymer. Aluminium being the major component of the ash, the tables give the aluminium content as indicator for the total ash content of the polymer.

Polymerization procedures

A) Polymerizations in a laboratory bench reactor

The polymerizations were conducted in an autoclave bench reactor having a volume of 3 l. The reactor was first charged with liquid propylene and an appropriate amount of hydrogen for melt flow control (typically 2.44 Nl, i.e. liters under normalized conditions of 25°C and 1 bar). Then a mixture of polymerization catalyst (10 mg for ZN126; 15 mg for ZN111), triethyl aluminium (TEAL) as 10 wt% solution in hexane and cyclohexylmethyldimethoxysilane (donor C) as 0.01 M solution in hexane was flushed into the reactor with liquid propylene. The respective volumes of the triethyl aluminium solution and cyclohexylmethyldimethoxysilane solution are a function of the targeted Al/Ti and Al/ED ratios. Total volume of liquid propylene fed to the reactor was 2 1. The reactor was then heated to 70°C. The polymerization was run for 60 minutes, then stopped by flashing off the unreacted propylene. The retrieved propylene polymer fluff was worked up using standard procedures.

B) Polymerizations in a pilot plant

Triethyl aluminium (TEAL) as solution in hexane and cyclohexylmethyldimethoxysilane (donor C) as solution in hexane were pre-contacted for about 1 min at room temperature, followed by addition of the polymerization catalyst in form of an oily slurry with 17 g of catalyst per liter of slurry. The resulting blend was mixed at room temperature for about 5 min and injected into a prepolymerization loop reactor, which was kept at a temperature of 15°C. The pre-polymerized catalytic system was then fed into the first of two serially connected 150 l loop reactors thermoregulated at 72 °C, to which also propylene and hydrogen in quantities sufficient to obtain a MFI of 2.5 - 3.5 dg/min were added continuously. The Al/Ti molar ratio was kept in the range from 25 to 35. The propylene flow rate was regulated in such a way that the polymer concentration in the reactor was kept constant with the density of the polymer slurry in the reactor being higher than 0.40 kg/l. The average residence time in the reactors was from 70 to 90 minutes.

Examples 1 to 3 and comparative examples 1 to 10

Examples 1 to 3 and comparative examples 1 to 4 were done with Avant ZN126, comparative examples 5 to 10 with Avant ZN111 according to polymerization procedure A) in a laboratory bench reactor. Polymerization conditions and properties of the obtained polymers are given in Table 1, with catalyst productivity given in g of propylene polymer per g catalyst. Table 1 gives calculated values for the aluminium content. Measured values for selected examples are shown in table 2. The results in table 2 show that even at a low level the aluminium is the major component of the ash and can therefore be taken as an indicator of total ash content in the propylene polymer.

The relative catalyst productivities for the diether catalyst and the phthalate catalyst in dependence of the Al/Ti molar ratio are shown in **figure 1.** The results demonstrate that the productivity of a diether catalyst (ZN126) can be maintained at very high levels even if the Al/Ti molar ratio is strongly reduced. For a phthalate catalyst (ZN111) the productivity drastically drops when the Al/Ti molar ratio is reduced.

Example 4 and comparative examples 11 to 13

The polymerizations were performed according to procedure B) in a pilot plant. More detailed polymerization conditions, including the catalyst, as well as polymer properties are given in table 3. The results show that the reduction in the level of triethyl aluminium does not lead to a drop in catalyst productivity for the diether catalyst. In polymerization conditions with a low level of triethyl aluminium no polymer could be obtained with the phthalate catalyst while the catalyst productivity of the diether catalyst remained high.

Examples 5 to 8 and comparative examples 14 to 20

The polymerizations were performed according to procedure A) in a laboratory bench reactor with Al/Ti molar ratio of 250 and 21 using ZN126 as catalyst. Productivities as well as xylene solubles (XS) of the propylene polymers are given in table 4. The productivity (in g of propylene polymer produced per g catalyst) in dependence of the xylene solubles (XS) of the polymer produced is shown in **figure 2**. Surprisingly the results show that the reduction in the level of triethyl aluminium (TEAL) does not lead to lower productivity as expected but actually to higher productivity for the production of low xylene soluble propylene polymers.

Table 1

| | Al/ED | Al/Ti | ED/Ti | Catalyst prod. | MFI | XS | Al (calculated) |
|---|---|---|---|---|---|---|---|
| Units | molar ratio | molar ratio | molar ratio | g/g/h | dg/min | wt% | ppm |
| Comp. ex. 1 | 70 | 273 | 3.9 | 49000 | 3.8 | 3.0 | 118 |
| Comp. ex. 2 | 39 | 149 | 3.8 | 47600 | 2.8 | 2.4 | 64 |
| Comp. ex. 3 | 22 | 83 | 3.8 | 47200 | 2.7 | 2.2 | 35 |
| Comp. ex. 4 | 11 | 42 | 3.8 | 46500 | 1.8 | 1.9 | 18 |
| Ex. 1 | 8 | 30 | 3.8 | 47000 | 2.2 | 2.0 | 13 |
| Ex.2 | 5 | 21 | 4.1 | 46200 | 2.3 | 1.9 | 9 |
| Ex. 3 | 3 | 10 | 3.8 | 46000 | 1.8 | 1.8 | 4 |
| Comp. ex. 5 | 70 | 304 | 4.3 | 30100 | 3.4 | 3.3 | 108 |
| Comp. ex. 6 | 36 | 152 | 4.3 | 27200 | 2.1 | 2.7 | 54 |
| Comp. ex. 7 | 12 | 51 | 4.3 | 28300 | 2.5 | 2.6 | 18 |
| Comp. ex. 8 | 6 | 25 | 4.2 | 24800 | 2.5 | 2.5 | 9 |
| Comp. ex. 9 | 6 | 25 | 4.2 | 23500 | 2.4 | 2.4 | 9 |
| Comp. ex. 10 | 3 | 13 | 4.3 | 22000 | 2.9 | 2.3 | 5 |

Table 2

| | Mg | Ti | Al |
|---|---|---|---|
| Units | ppm | ppm | ppm |
| Ex. 2 | 3.5 | 0.8 | 9.7 |
| Ex. 3 | 3.3 | 1.0 | 5.2 |
| Comp. ex. 10 | 7.7 | 0.7 | 6.1 |

Table 3

| | Unit | Comp. ex. 11 | Ex. 4 | Comp. ex. 12 | Comp. ex. 13 |
|---|---|---|---|---|---|
| Catalyst | | ZN126 | ZN126 | ZN111 | ZN111 |
| External donor (ED) | | C | C | C | C |
| Reactor pressure | bar | 38 | 38 | 38 | 38 |
| Pre-polymerization | | | | | |
| Temperature | °C | 15 | 17 | 15 | 15 |
| Propylene | kg/h | 30 | 30 | 30 | 30 |
| TEAL/propylene | g/kg | 0.22 | 0.03 | 0.21 | 0.03 |
| TEAL/ED | g/g | 494 | 31 | 42 | 42 |

(continued)

| | Unit | Comp. ex. 11 | Ex. 4 | Comp. ex. 12 | Comp. ex. 13 |
|---|---|---|---|---|---|
| Loop 1 | | | | | |
| Temperature | °C | 72 | 72 | 72 | 72 |
| Propylene | kg/h | 40 | 55 | 55 | 55 |
| Hydrogen | nl | 12 | 13 | 14 | 17 |
| Production loop 1 | kg/h | 31.3 | 37.1 | 31.5 | no reaction |
| Residence time | min | 63 | 56 | 55 | 56 |
| Contribution loop 1 | wt% | 65.5 | 66.80 | 61.8 | no reaction |
| MFI | dg/min | 2.9 | 3.3 | 3.2 | no reaction |
| Loop 2 | | | | | |
| Temperature | °C | 72 | 72 | 72 | 72 |
| Propylene | kg/h | 45 | 40 | 40 | 40 |
| Hydrogen | nl | 9 | 8 | 10 | 14 |
| Residence time | min | 22 | 25 | 25 | 26 |
| Total production | kg/h | 47.8 | 55.5 | 49.5 | no reaction |
| Catalyst productivity | g PP / g catalyst | 62600 | 62500 | 31200 | no reaction |
| Al/Ti (molar ratio) | | 239 | 28 | 240 | no reaction |
| Al/ED (molar ratio) | | 814 | 51 | 65 | 63 |
| Propylene polymer | | | | | |
| MFI | dg/min | 3.2 | 3.3 | 3.1 | no reaction |
| XS | wt% | 3.9 | 3.8 | 4.0 | no reaction |
| Al (calculated) | ppm | 55 | 9 | 53 | no reaction |
| Al (measured) | ppm | 52 | 10 | - | - |
| Mg (measured) | ppm | 2.3 | 1.9 | - | - |
| Ti (measured) | ppm | 0.7 | 0.7 | - | - |

Table 4

| | Al/Ti | Productivity | XS |
|---|---|---|---|
| Units | m.r. | g PP / g cata | wt% |
| Ex. 5 | 21 | 62400 | 5.4 |
| Ex. 6 | 21 | 54400 | 2.8 |
| Ex. 7 | 21 | 46200 | 1.9 |
| Ex. 8 | 21 | 46100 | 1.9 |
| Comp.ex.14 | 250 | 56000 | 2.6 |
| Comp.ex.15 | 250 | 33100 | 1.8 |
| Comp.ex.16 | 250 | 34400 | 1.8 |
| Comp. ex. 17 | 250 | 58300 | 4.2 |
| Comp.ex.18 | 250 | 55300 | 2.7 |
| Comp. ex. 19 | 250 | 62500 | 4.4 |
| Comp. ex. 20 | 250 | 62600 | 4.9 |

The results show that with Ziegler-Natta catalysts having a phthalate as internal electron donor the reduction in the level of triethyl aluminium leads to a drastically reduced catalyst productivity and in consequence to higher production costs, particularly in the production of propylene polymers having low levels of xylene solubles. In extremis, as seen in

comparative example 13, no propylene polymer could be produced.

On the other hand, the results show that the use of a Ziegler-Natta catalyst with a diether as internal electron donor allows reducing the level of triethyl aluminium without at the same time significant loosing catalyst productivity. In particular, the advantage of the present invention lies in the fact that for the production of low xylene soluble propylene polymers the reduction in the triethyl aluminium (TEAL) level does not lead to lower productivity as expected by actually results in an increase in the productivity.

## Claims

1. Process for the production of propylene polymers having a low ash content by polymerization of propylene and one or more optional comonomers in a polymerization reactor in presence of:

   (a) a Ziegler-Natta catalyst comprising a titanium compound having at least one titanium-halogen bond, and an internal electron donor, both supported on a magnesium halide in active form,
   (b) triethyl aluminium, and
   (c) optionally an external electron donor (ED),

   wherein the internal electron donor comprises at least 80 wt% of a diether, the molar ratio Al/Ti is at most 40, the residence time in the polymerization reactor is at most 2 hours, and the propylene polymers are recovered from the polymerization reactor, without any washing, as a powder and optionally converted to pellets.

2. Process according to claim 1 in which the molar ratio Al/Ti is in the range from 10 to 40, preferably in the range from 10 to 35.

3. Process according to any of the preceding claims in which there is an external electron donor (ED).

4. Process according to claim 3 in which the molar ratio AI/ED is at most 120.

5. Process according to claim 3 or claim 4 in which the molar ratio AI/ED is in the range from 10 to 120, preferably in the range from 20 to 80.

6. Process according to any of claims 3 to 5, wherein the external electron donor comprises a silane.

7. Propylene polymer made according to the process of claims 1 to 6.

8. Film made with the propylene polymer of claim 7.

9. Fiber or nonwoven made with the propylene polymer of claim 7.

10. Use of the film of claim 8 in packaging applications.

11. Use of the fiber or nonwoven of claim 9 in hygiene applications.

Figure 1

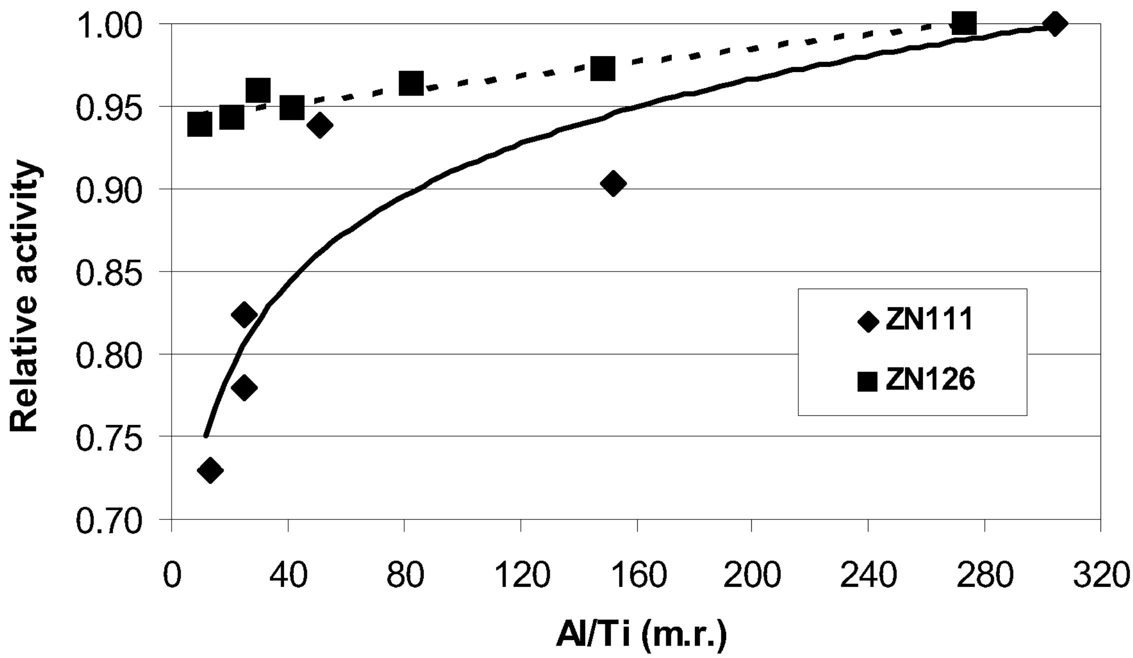


Figure 2

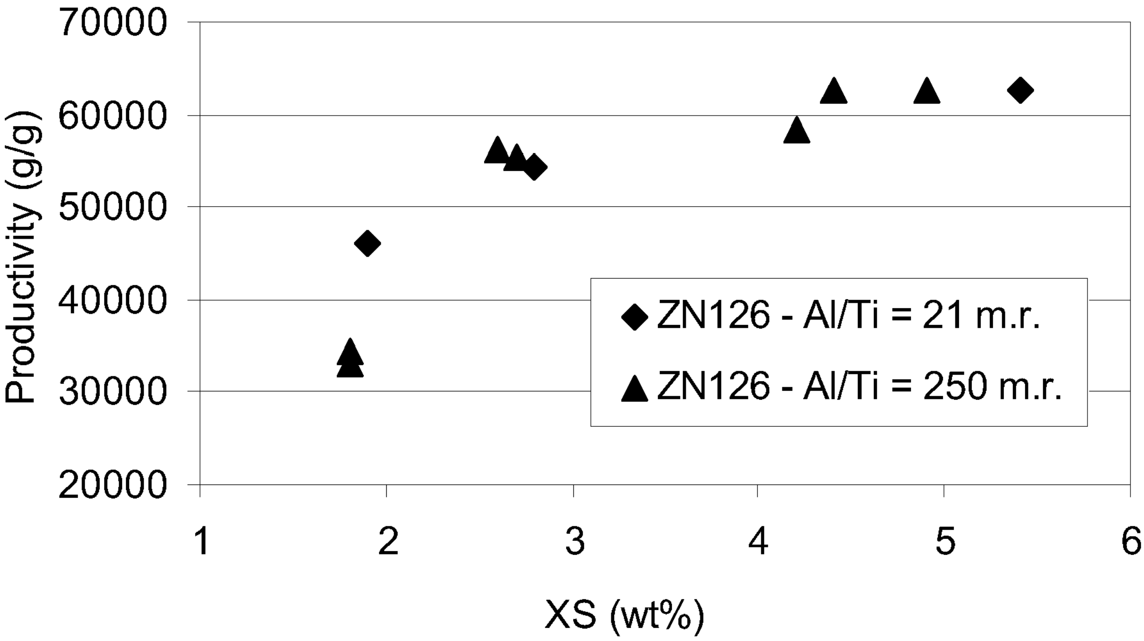

European Patent Office

# EUROPEAN SEARCH REPORT

Application Number
EP 06 12 2764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 0 449 302 A (HIMONT INC [US]) 2 October 1991 (1991-10-02) * the whole document * ----- | 7-11 | INV. C08F10/06 C08F4/651 C08F4/654 |
| Y | US 4 146 502 A1 (YOKOYAMA MASUZO ET AL) 27 March 1979 (1979-03-27) * the whole document * ----- | 1-11 | |
| Y | US 5 529 850 A1 (MORINI GIAMPIERO [IT] ET AL) 25 June 1996 (1996-06-25) * the whole document * ----- | 1-11 | |
| Y | US 5 780 378 A1 (TOIDA TETSUYA [JP] ET AL) 14 July 1998 (1998-07-14) * the whole document * ----- | 1-11 | |
| Y | EP 0 922 712 A1 (UNION CARBIDE CHEM PLASTIC [US]) 16 June 1999 (1999-06-16) * the whole document * ----- | 1-11 | |
| Y | EP 0 790 260 A1 (JAPAN POLYOLEFINS CO LTD [JP]) 20 August 1997 (1997-08-20) * the whole document * ----- | 1-11 | TECHNICAL FIELDS SEARCHED (IPC) C08F |

The present search report has been drawn up for all claims

| Place of search | Date of completion of the search | Examiner |
|---|---|---|
| Munich | 26 March 2007 | BALMER, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 06 12 2764

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2007

| Patent document cited in search report | | Publication date | Patent family member(s) | | | Publication date |
|---|---|---|---|---|---|---|
| EP 0449302 | A | 02-10-1991 | AU | 635624 | B2 | 25-03-1993 |
| | | | AU | 7386591 | A | 03-10-1991 |
| | | | BR | 9101278 | A | 05-11-1991 |
| | | | CA | 2039444 | A1 | 01-10-1991 |
| | | | CN | 1055934 | A | 06-11-1991 |
| | | | CS | 9100879 | A2 | 12-11-1991 |
| | | | FI | 911506 | A | 01-10-1991 |
| | | | HU | 57801 | A2 | 30-12-1991 |
| | | | IT | 1241094 | B | 29-12-1993 |
| | | | MX | 25157 | A | 01-12-1993 |
| | | | NO | 911239 | A | 01-10-1991 |
| | | | PT | 97209 | A | 29-11-1991 |
| | | | US | 5557025 | A | 17-09-1996 |
| | | | ZA | 9102284 | A | 24-12-1991 |
| US 4146502 | A1 | | NONE | | | |
| US 5529850 | A1 | | NONE | | | |
| US 5780378 | A1 | | NONE | | | |
| EP 0922712 | A1 | 16-06-1999 | AU | 738471 | B2 | 20-09-2001 |
| | | | AU | 8615998 | A | 01-07-1999 |
| | | | BR | 9804312 | A | 14-12-1999 |
| | | | CA | 2255522 | A1 | 10-06-1999 |
| | | | DE | 69810253 | D1 | 30-01-2003 |
| | | | DE | 69810253 | T2 | 13-11-2003 |
| | | | ES | 2185119 | T3 | 16-04-2003 |
| | | | JP | 3549417 | B2 | 04-08-2004 |
| | | | JP | 11255693 | A | 21-09-1999 |
| | | | US | 5968865 | A | 19-10-1999 |
| EP 0790260 | A1 | 20-08-1997 | CA | 2197610 | A1 | 17-08-1997 |
| | | | DE | 69716791 | D1 | 12-12-2002 |
| | | | DE | 69716791 | T2 | 17-07-2003 |
| | | | JP | 3143057 | B2 | 07-03-2001 |
| | | | JP | 9221513 | A | 26-08-1997 |
| | | | US | 5902765 | A | 11-05-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 449302 A
- EP 361493 A
- EP 728769 A